Europäisches Patentamt

(19) European Patent Office

Office européen des brevets

(11) Publication number: **0 105 385**
**B1**

(12) **EUROPEAN PATENT SPECIFICATION**

(45) Date of publication of patent specification: **29.10.86**

(21) Application number: **83901222.6**

(22) Date of filing: **14.04.83**

(86) International application number:
**PCT/JP83/00115**

(87) International publication number:
**WO 83/03602 27.10.83 Gazette 83/25**

(51) Int. Cl.⁴: **C 04 B 14/48, B 21 B 1/16,**
**B 21 B 1/08, B 21 H 8/00**

(54) **CONCRETE-REINFORCING STEEL FIBER AND METHOD OF FABRICATION THEREOF.**

(30) Priority: **16.04.82 JP 62502/82**

(43) Date of publication of application:
**18.04.84 Bulletin 84/16**

(45) Publication of the grant of the patent:
**29.10.86 Bulletin 86/44**

(84) Designated Contracting States:
**DE FR GB**

(56) References cited:
**JP-A-48 038 854**
**JP-A-55 052 453**
**JP-A-55 165 201**
**JP-A-57 094 403**

(73) Proprietor: **TOKYO ROPE MANUFACTURING
CO.LTD.
No.8 Muromachi 2-chome Nihonbashi
Chuo-ku Tokyo 103 (JP)**

(73) Proprietor: **TEZUKA,Yoshitomo
No. 83-7 Suwa-cho Hachioji-shi
JP-Tokyo, 193 (JP)**

(72) Inventor: **TEZUKA, Yoshitomo
No. 83-7, Suwa-cho Hachioji-shi
Tokyo 193 (JP)**

(74) Representative: **Heusler, Wolfgang, Dipl.-Ing.
et al
Von Bezold, Dieter, Dr. Schütz, Peter, Dipl.-Ing.
Heusler, Wolfgang, Dipl.-Ing. Maria-Theresia-
Strasse 22 Postfach 860 260
D-8000 München 86 (DE)**

Courier Press, Leamington Spa, England.

## Description

Steel fibers of 0.1 to 0.4 mm² in cross sectional area and 20 to 40 mm in length have been employed for improving concrete structures or concrete products with regard to cracks, tension and other characteristics. Known reinforcing steel fibers are produced by cutting from steel wires, shearing from thin plate, machining from a thick plate, or directly extracting from molten steel. Fibers of the cut wire type have excellent tensile strength as cold drawn materials can be used. However, since the cut wire type has in general a smooth circular cross section, it has the demerit that the ratio of the surface area to the volume is small and the adhesive strength with concrete or mortar is low (only drawing resistance by friction). As countermeasure, it is known to provide concavities and convexities equidistantly over the full length of the fiber, but adhesion does not increase satisfactorily if the cross section is uniform in width or thickness. If the adhesion were increased somehow and the fibers had uniform tensile strength over the full length, and if the concrete were subjected to external actions such as bending or tension, the combination of the fibers and the concrete matrix would be broken at once. Thus, the high tensile strength of the fibers would turn out to have rather harmful effects and cause abrupt load changing in the concrete structure.

For producing the steel fibers of the conventional wire cut type, an ingot is passed through a rough roll to reduce the diameter to 5 or 6 mm φ, and through a multistep drawing die, i.e. a die formed with a tapering hole or a roll die. This process involves tension steps by means of coiling rolls such as capstans or drums, and since the stretching steps are discontinuous, the efficiency of the process is low. Besides, the tension system requires high drive force, and a large scaled and complicated apparatus is necessary for the intermediate coiling. Therefore, the fiber production is low in efficiency while the producing cost is high.

It is further known to bend the fibers to a trapezoid form in cross section, but such fibers tend to form fiber balls and, in addition, are easily broken at the bending points.

It is already known to produce reinforcing fibers having a plurality of flattened parts as well as knots extending in directions perpendicular to the plane of the flattened parts (JP—A 57—94403). The fibers may be produced by introducing a wire material between a pair of forming rolls having equidistantly provided knot imprinting grooves in their surface, and thereafter cutting the material at the desired length of the fibers by passing it through a pair of cutting rolls. Such fibers are essentially uniform over their full length and are not suited for overcoming the problems explained above particular with regard to undesired effects in the event of load changes in a concrete matrix.

An object of the invention is to provide concrete reinforcing steel fibers of the cut wire type which have sufficient tensile strength and high adhesion strength but permits to obtain reinforced concrete of high toughness without the risk of generating abrupt load changing or breaking of the combination of the fibers and the concrete matrix when the concrete is destructed.

A second object of the invention is to provide a process by which steel fibers having the above mentioned characteristics may be easily produced at high efficiency and low production cost.

These objects are accomplished by the features of the patent claims.

The knots protruding in the thickness (e.g. vertical) dimension and in the width (lateral) dimension, respectively, increase the surface area, and since the knots become larger and harder as going to the ends of the fibers, the adhesive strength of the concrete and the drawing resistance become high due to the anchoring effect thereof. The central shaft portion of the fiber is rigid and has a strength equivalent to that of the wire material used for producing the fiber but may be easily elongated when load is subjected. The shaft portion permits slipping and may be deformed due to elongation until it is broken by the load, in which event the combination between the anchoring portions of the fiber and the concrete matrix is exactly maintained.

Preferred embodiments for reducing the invention to practice will now be explained with reference to the drawings.

Fig. 1 is a plan view showing one example of a concrete reinforcing steel fiber in accordance with the invention,

Fig. 2 is a side view of the same,

Fig. 3 is a cross sectional view along III—III in Fig. 1,

Fig. 4 is a cross sectional view along IV—IV in Fig. 1,

Fig. 5 is a cross sectional view along V—V in Fig. 2,

Fig. 6 is a plan view showing another example of the invention,

Fig. 7 is a cross sectional view along VII—VII in Fig. 6,

Fig. 8 is a cross sectional view along VIII—VIII in Fig. 6,

Fig. 9 is a graph showing the relation between bending load and deformation when bending tests were made on concrete mixed with the steel fibers according to the invention and conventional fibers, respectively,

Fig. 10 is a side view of a roll system for producing the concrete reinforcing steel fibers according to the invention,

Fig. 11 is a cross sectional view showing one part of the roll system for producing fine wires,

Fig. 12 is a cross sectional view of a group of rolls for producing fine wires,

Fig. 13 is a side view of a system for producing fibers of particular shape and for cutting them,

Fig. 14 is a side view, partially in section, of rolls for forming fibers of particular shape, and

Figs. 15a to 15d are explanatory views showing a stepwise process of producing fibers of particular shape.

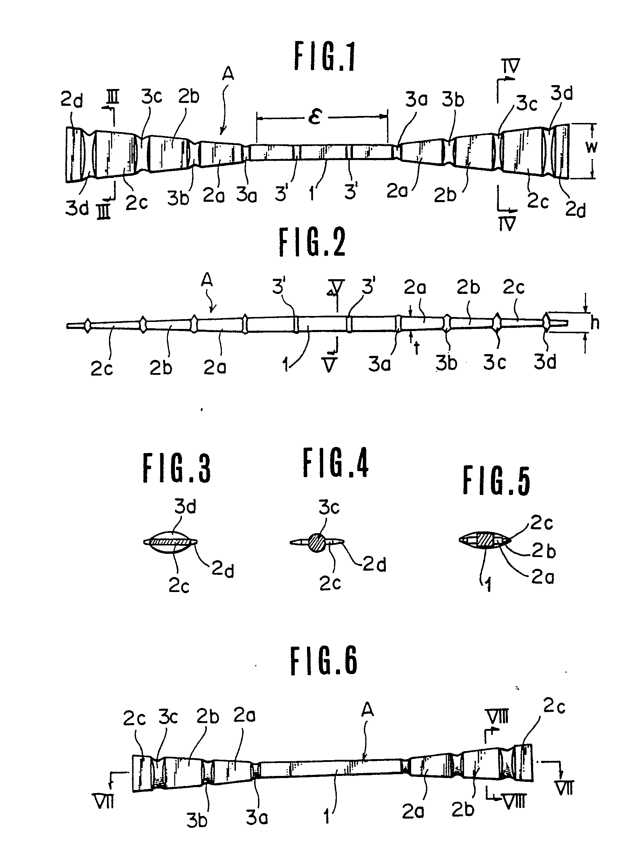

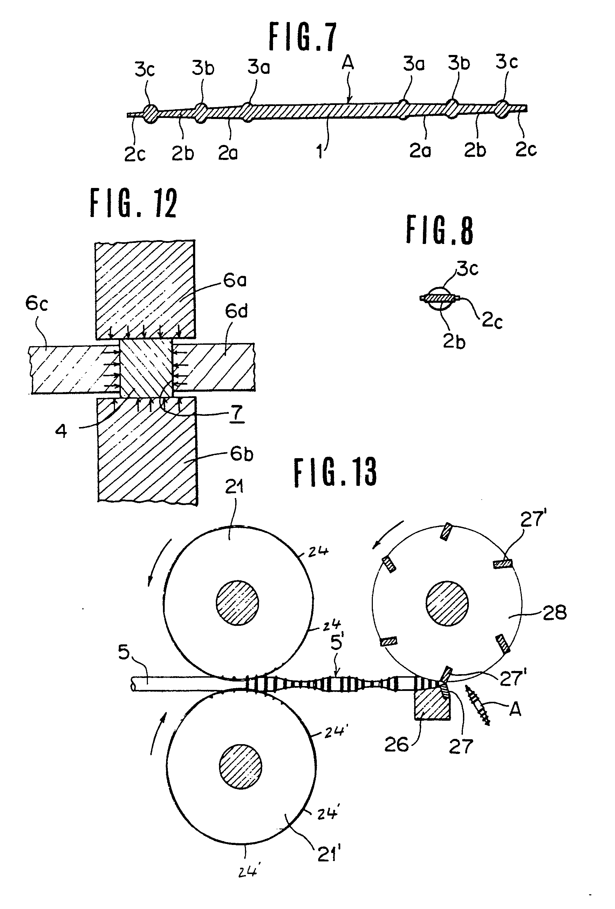

Figs. 1 to 5 show one example of the concrete reinforcing steel fiber according to the invention, and Figs. 6 to 8 show another example of the same. In the drawings, "A" designates the entire body of a short steel fiber of the wire cut type. It has a shaft portion 1 which is formed at the center and in length of the fiber and where deformation is available under elongation. This portion has circular cross section (Fig. 6) or rectangular cross section (Fig. 1) almost equal to that of the raw material. Its surface is perfectly flat as shown in Fig. 6 or is formed equidistantly with small convexities 3' as shown in Fig. 1. The shaft portion is soft where elongation of 10 to 25% is available, and its length is preferably about $\frac{1}{3}$ of the full length of the fiber and may be varied between $\frac{1}{2}$ and $\frac{1}{4}$ thereof in accordance with the necessary strength of the reinforced concrete.

2a, 2b, 2c, 2d are knots which are symmetrically formed from said shaft portion 1. The knots 2a, 2b, 2c, 2d protrude in width (lateral) of the fiber, and the protruding amount (width) w becomes gradually increased as going from the shaft portion to the ends in length, while the thickness t becomes gradually decreased. Seen from the plan view, the fiber is narrow at the center, and expanded towards the both ends in length.

3a, 3b, 3c, 3d are knots formed between the knots 2a, 2b, 2c, 2d and protrude in the thickness (vertical) dimension. In Figs. 3 to 5, they protrude almost in trapezoid or triangle form from the surface of the knots 2a, 2b, 2c, 2d. In an embodiment shown in Figs. 6 to 8, the side has the shape of an arc. The thickness or height h of all knots 3a etc. is equal over the full length of the fiber, but since the thickness t of the knots 2a etc. becomes gradually smaller in as they taper towards the ends, the protruding amount of the knots 3a etc. substantially increases as going thereto.

General characteristics which are required for steel fibers are satisfactory strength, smooth dispersion in the concrete without making fiber balls, and firm adhesion with the concrete. In the instant products, since the mother material is a rolled steel wire, very high tensile strength is provided. The knots 2a etc. in width and the knots 3a etc. in thickness are work hardened due to plastic deformation, so that there is sufficient hardness. Since the whole body has a needle-like shape and the knots 2a etc. are flat in the width dimension, the fibers flow smoothly without twining with each other. The shaft portion 1 at the center part of the fiber is lower in hardness than the other parts, but it is sufficiently thick and rigid. Therefore, when the steel fibers are thrown into the liquid concrete in lump, they rapidly disperse without maldistributing and are uniformly mixed.

As shown the steel fiber of the invention is not only formed with concavities and convexities (or indents) in thickness or width thereof but formed with the knots 2a, 2b, 2c, 2d, 3a, 3b, 3c, 3d in both the thickness and width dimensions, and these knots become larger as going to the ends in the length of the fiber. The adhesion with the concrete is therefore very high, and since all the knots grow larger towards the ends of the fiber, there is a satisfactory anchoring effect and high drawing resistance.

The adhering and drawing strength of the fiber in the concrete matrix depends on its shape. That is, assuming that the length of the steel fiber is l, the width is $t_1$, the thickness is $t_2$, the adhering strength of the surface area is P (kg/mm$^2$), the drawing strength is W (kg), and the outer circumference of the cross section perpendicular to length is $L = 2(t_1 + t_2)$, the drawing strength of the steel fiber of wire cut type with a smooth surface will be $W = P \cdot L \cdot l/2$, and the adhering strength is solely relative with friction against the concrete.

On the other hand, if the steel fiber is formed, according to the invention, with the knots 2a, etc. in width and the knots 3a etc. in thickness, shearing is acted on the concrete by the available concavities and convexities in these two directions, and the areas of the indents which cause the available shearing are relative with the shearing force of the concrete. Assuming that the width of the available convexity (knot in width) is w, the height of the available convexity (knot in thickness) is h, the length of the available sheared surface of the fiber is l/2 at the maximum, and the shearing force of the concrete is τ (kg/mm$^2$), the drawing force will be $W = 2\tau(w + h)l/2$ and the adhering force is remarkably increased.

Further, toughness is increased in the reinforced concrete by the drawing resistance. But when the drawing resistance is increased, and if the tensile strength is too high and is uniform over the full length, the combination with the concrete matrix may be destroyed and abrupt changing in strength may occur. Such problem may arise especially if steel fibers of high tensile strength of the wire cut type are used. Therefore, according to the invention, the knots are not formed over the full length of the fiber, and the shaft portion 1 which is deformable due to elongation is provided at the center part of the fiber. This shaft portion 1 is formed without any essential idents as concavities and convexities so that the adhesion is controlled by the friction against the concrete, and since this portion is not essentially effected by plastic working and remains as the mother material, it is easily deformed. Therefore, when the concrete is broken, the shaft portion 1 serves as slipping or free portion, and it is deformed due to elongation and broken before the combination of the anchoring part and the concrete matrix is destructed. The combining parts drop off one by one stepwise while all the knots are not destructed. Thus the toughness of the concrete is very satisfactory.

The above mentioned points will be discussed in relation with the adhering strength. Assuming that the available cross sectional area of the steel fiber is a (mm$^2$), the tensile stress perpendicular to length of the fiber is σt (kg/mm$^2$), the tensile strength is Wf (kg), and the drawing strength is W (kg), the present invention enables to provide $W > Wf (= a\sigma t)$ by preparing the shaft portion 1 at the center in length of the fiber which is deformed under elongation. Since the adhering strength is made larger than the tensile strength of the fiber such that the latter is not unnecessarily made larger than the former, the combination of the fiber with the concrete matrix is not broken when destructing the concrete, and no abrupt change of the load will be caused.

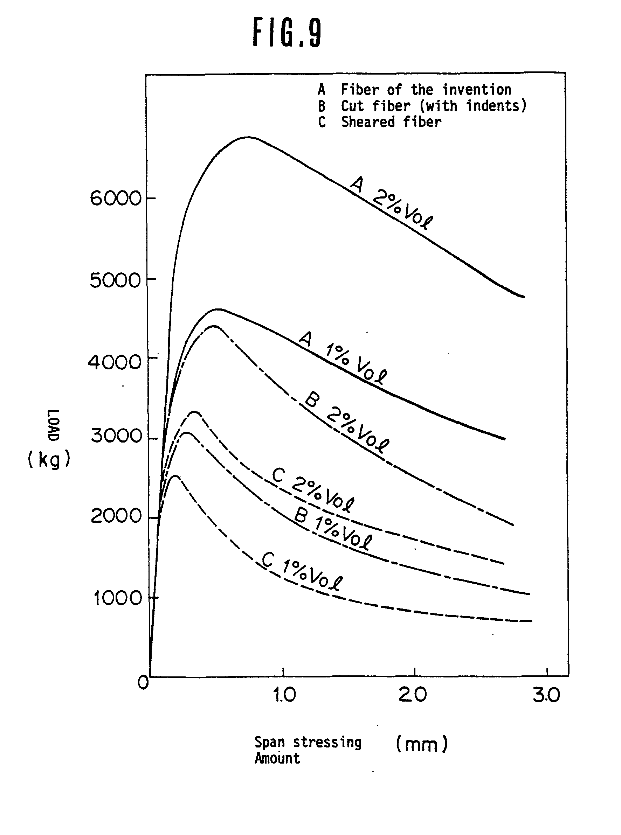

Regarding Fig. 9, steel fibers of $l = 30$ mm, $w = 1,6$ mm, $h = 0,7$ mm, $a = 0,28$ mm$^2$ and $\varepsilon = 10$ mm were mixed in liquid concrete of W/C = 50%, and reinforced concrete parts of $10 \times 10 \times 30$ cm were made and subjected to a bending test. The data of the bending test were compared with those of conventional wire cut fibers and sheared fibers. From Fig. 9, it is seen that the present invention satisfies strength and toughness requirements.

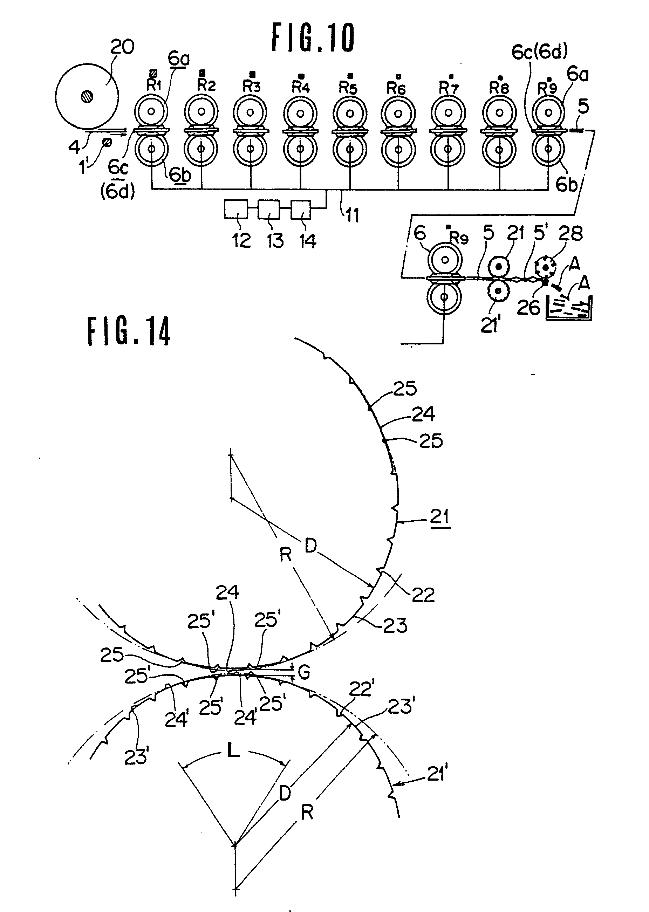

A process of producing the above-mentioned steel fibers will now be explained with reference to Figs. 10 to 15, comprising a step of rolling a raw material into fine wires, a step of imprinting the shaft portions and knots on the wires, and a step of cutting the fibers to determined length.

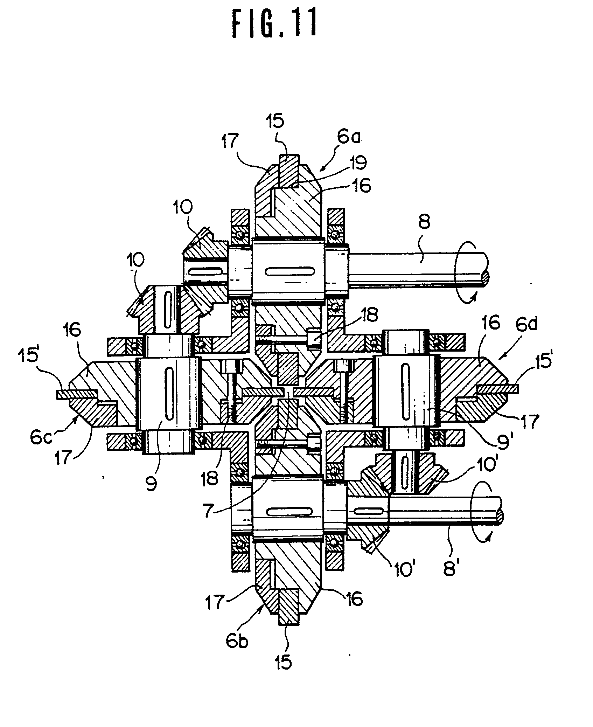

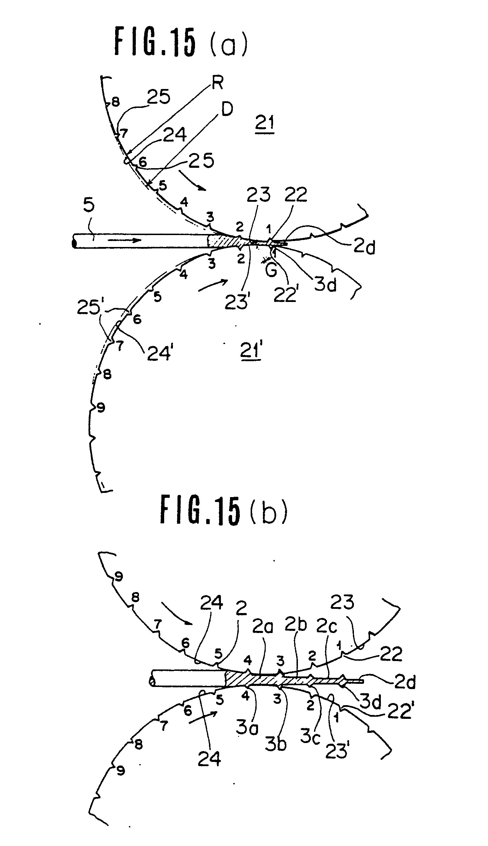

In the first step, a stretched raw material 4 is rolled to 5 to 6 mm φ in diameter in a conventional manner. For producing the fine wires 5 from the raw material, the present invention requires special multi-rolling. In Fig. 10, $R_1$ to $R_9$ are groups of multi-rolls disposed in series. As shown in Figs. 11 and 12, each group comprises four mutually opposite rolls of vertical and lateral pairs, The center between the vertical rolls 6a, 6b and the lateral rolls 6c, 6d is formed with a rectangular gap 7 for providing a determined reduction rate. The lateral rolls 6c, 6d extend between the vertical rolls 6a, 6b and their ends are thinner than those of the rolls 6a, 6b.

At least one roll of each group of multi-rolls $R_1$ to $R_9$ is driven at pre-determined speed by means of a servo motor (not shown). As shown, a shaft 8 of the upper roll 6a and a shaft 9 of the left roll 6c are, as a rotation transmitting mechanism, engaged by bevel gears 10 and a shaft 8' of the lower roll 6b and a shaft 9' of the right roll 6d are engaged by bevel gear 10'. Shafts 8, 8' of the vertical rolls 6a, 6b are engaged by spur gears (not shown) gearing with each other.

Each unit of the multi-rolls $R_1$ to $R_9$ is driven and controlled such that the rolling speed corresponds to the reduction rate. The motors driving the rolls of the respective units are combined by a common control system 11 adjusting the rotation speed in accordance with the deformation rate in the cross sectional areas of the wire materials in response to a setting device 12, a calculator 13 and a controller 14.

For producing fine wires of about 0,6 mm φ, one side of the rectangular gap 7 is about 0,5 mm at the last stage. As it is rather difficult to meet this size, it is desirable to provide one specific unit with four rolls 6a to 6d as shown in Fig. 11. This unit comprises rolls 15, 15' of ring shape, which have been subjected to quenching and surface-grinding, upper and lower pressers 16, 17 supporting the ring-shaped rolls 15, 15' therebetween, and bolts 18 securing the pressers 16, 17. The presser 16 is fixed to the shaft 8 by a key and is fitted to the ring-shaped roll 15 by a boss 19 of large diameter. Owing to this structure, the rolls are very easily controlled for forming a small gap, and rectangular gaps of high precision may be provided by simple surface grinding.

In operation, the groups of multi-rolls $R_1$ to $R_9$ are driven, and the wire material 4 is inserted into the rectangular gap 7 of the first group $R_1$ and is rolled on its four sides at the same time by rotation of the vertical and lateral rolls 6a to 6d. The resulting wire of rectangular and reduced cross sectional areas goes to the second group $R_2$ having a rectangular gap in accordance with a pre-determined reduction rate and increased rotation speed, the rolling being again accomplished on the four sides of the wire by means of the four rolls of the group. The subsequent rolling steps are successively carried out in the third group $R_3$ and in the fourth group $R_4$ etc., and the required fine wire 5 runs out from the final group $R_9$.

The above mentioned fine wire making process does not reduce the cross section by drawing the wire material as conventionally, but the reduction is accomplished by compressing the four sides of the wire by means of the four rolls of each group, i.e. by plastic working. Therefore the reduction rate may be made large and no intermediate drawing step is required so that the processing speed can be increased and the driving force may be low.

In the next step of imprinting the shaft portion and the knots, the invention is featured by using a couple of special forming rolls 21, 21'. As shown in Figs. 13 and 14, the forming rolls 21, 21' have a pre-determined diameter D and are formed with knot imprinting grooves 22, 22' on the surfaces 23, 23' of the rolls. In this embodiment, the knot imprinting groove is formed as a 90° V-cut, but the invention is not limitated thereto. The forming rolls 21, 21' of diameter D are the same as conventional indent processing rolls, and the fine wires 5 are rolled in uniform thickness (diameter) over the full length and formed with simple knots in the thickness dimension. According to the invention, however, the reduction rate of the forming rolls 21, 21' changes periodically by fixed ranges on the circumference, which rolls have the knots imprinting grooves 22, 22' at a determined pitch. As shown in Fig. 14, the roll surfaces 23, 23' of the range L corresponding to a circumferential length which is shorter than the fiber length, are slightly cut to provide a biasing diameter (R) which is larger than the diameter D of the forming rolls 21, 21', in order to equidistantly provide forming surfaces 24, 24' having knot imprinting grooves 25, 25' which are shallower by the cut amount over the full circumference of the forming rolls 21, 21'. The knot imprinting grooves 25, 25' include those of almost zero depth.

The fine wires 5 from the final group $R_9$ of the preceding step may be passed to the forming rolls 21, 21' directly or via a coiling drum (not shown). One or more rolls having round grooves may be positioned, if necessary between the final group R₉ and the forming rolls 21, 21′ in order to form wire of circular cross section from the rectangular one.

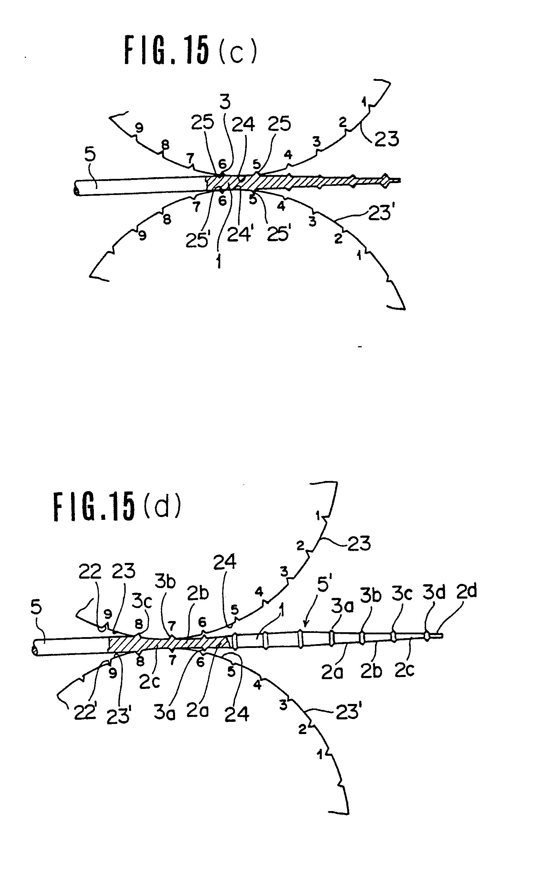

For obtaining products of particular shapes, a standard is made with reference to the forming surfaces 24, 24′, and adjustment is made such that the roll gap 6 (Fig. 14) obtained between said surfaces is almost equal to the diameter or thickness of the fine wires 5. Under this condition, the forming rolls 21, 21′ are driven at equal speed, and when the fine wire 5 is inserted, it is reduced in thickness by the roll surfaces 23, 23′ of the diameter D as shown in Fig. 15a. Since the gap between the roll surfaces 23, 23′ is smaller than the gap between the forming surfaces 24, 24′, the rolling amount of the fine wires 5 is large, and accordingly the thickness is reduced to form knots 2d expanding in flatness. Since the knot imprinting grooves 22, 22′ are deep, knots 3d are formed which are high and grow in thickness.

While the wire 5 moves in the axial direction, the reduction amount is continuously lowered as shown in Fig. 15b as the forming surfaces 24, 24′ continuing from the roll surfaces 23, 23′ of diameter D act on the wire and the roll gap gradually increases. Therefore, the knots 2b, 2c expand in thickness along the length, the expanding amount gradually decreasing, and subsequently the knots 3b, 3c are formed in the thickness dimension by the knot imprinting grooves 22, 22′.

When the wire 5 further moves, the minimum diameter arc regions of the forming surfaces 24, 24′ are opposite each other as shown in Fig. 15c, so that the roll gap is maximum and the rolling reduction is minimum. In this stage a nearly straight shaft portion is formed with slight convexities 3′.

When the forming rolls 21, 21′ are further rotated, the roll gap again becomes smaller due to the forming surfaces 24, 24′ continuing from the roll surfaces 23, 23′ of diameter D. Thereby the reduction is increased on the wire 5, which tapers to become thin as shown in Fig. 15d, while knots 2c, 2b, 2a expanding in width are produced successively and knots 3c, 3b, 3a expanding in thickness are produced between the knots 2c, 2b, 2a.

After passing through the process explained above, the wires formed with the shaft portion 1 and the knots 2a, 2b, 2c, 3a, 3b, 3c are cut in the determined length. This cutting is optional and, for example, may be carried out by a stationary die 26 having tips 27 and a rotary roll 28 having tips 27′ equidistantly on the circumference. Thus, the steel fibers A as shown in Figs. 1 and 6 are produced.

The steel fibers according to the invention may be used not only for reinforcing concrete or mortar, but also for materials to be mixed in metallurgical refractories. If having thicker diameters, the proposed steel fiber may also be substituted for structural iron bars.

**Claims**

1. Concrete reinforcing steel fiber having a plurality of flattened first knots (2a, 2b, 2c, 2d), and a plurality of second knots (3a, 3b, 3c, 3d) essentially extending in directions perpendicular to the plane of said first knots, characterized in that

said knots (2a, 3a, etc.) are alternately provided between each end of the fiber and a central shaft portion (1) which is elongatable in the concrete,

said first knots (2a etc.) becoming larger and thinner along the length of the fiber from said shaft portion (1) towards the ends of the fiber while said second knots (3a etc.) become thicker with reference to the surface of said first knots (2a etc.).

2. Concrete reinforcing steel fiber as claimed in Claim 1, wherein the shaft portion (1) is rectangular in cross section.

3. Concrete reinforcing steel fiber as claimed in Claim 1, wherein the shaft portion (1) is circular in cross section.

4. Concrete reinforcing steel fiber as claimed in Claim 1, 2 or 3, wherein the thickness of said second knots (3a, 3b, 3c, 3d) is equal over the full length of the fiber with reference to the axis thereof.

5. Concrete reinforcing steel fiber as claimed in any of the preceding Claims, wherein the second knots (3a, 3b, 3c, 3d) are angular at the sides thereof defining a maximum thickness at the center thereof in the cross section transversal with respect to the plane of the first knots (2a, etc.).

6. Concrete reinforcing steel fiber as claimed in any of Claims 1—4, wherein the second knots (3a, 3b, 3c) are shaped as an arc in the cross section transversal with respect to the plane of the first knots (2a, etc.).

7. Concrete reinforcing steel fiber as claimed in any of the preceding claims, wherein the length of said central shaft portion (1) is between $\frac{1}{2}$ and $\frac{1}{4}$, preferably about $\frac{1}{3}$ of the length of the fiber.

8. Method of fabrication of concrete reinforcing steel fibers according to claim 1, characterized by the steps of

introducing a wire (5) between a pair of forming rolls (21, 21′) having alternating first and second surface portions (23, 23′; 24, 24′) defining a gradually increasing and decreasing gap (G) during rotation of the rolls, said first and/or second surface portion having equidistantly provided knot imprinting grooves (22, 22′, 25, 25′) therein extending in parallel to the roll shaft;

continuously imprinting said knots of the fibers between said surface portions (23, 23′) of said forming rolls (21, 21′) defining the smaller gap while leaving said central shaft portion of the fibers essentially unworked between the surface portions (24, 24′) defining the maximum roll gap;

and separating the fibers by cutting the material leaving said forming rolls (21, 21′).

9. Method according to claim 8, characterized in that a wire raw material (4) is subjected to rolling reduction at four sides thereof by passing through groups ($R_1$—$R_9$) of four rolls forming a rectangular gap, one roll of each group being driven such that the rolling speed is increased in accordance with the pre-determined reduction, and the fine wire obtained thereby is introduced into said forming rolls (21, 21').

## Patentansprüche

1. Betonverstärkende Stahlfaser, die mehrere abgeflachte erste Knotenelemente (2a, 2b, 2c, 2d) und mehrere sich im wesentlichen senkrecht zu der Ebene der ersten Knotenelemente erstreckende zweite Knotenelemente (3a, 3b, 3c, 3d) hat, dadurch gekennzeichnet,

daß die Knotenelemente (2a, 3a, usw.) abwechselnd zwischen jedem Ende der Faser und einem in dem Beton längsdehnbaren zentralen Schaftteil (1) vorgesehen sind, wobei die ersten Knotenelemente (2a, usw.) längs der Faser von dem Schaftteil (1) aus zu den Faserenden hin breiter und dünner werden, während die zweiten Knotenelemente (3a, usw.) bezüglich der Oberfläche der ersten Knotenelemente (2a, usw.) dicker werden.

2. Betonverstärkende Stahlfaser gemäß Anspruch 1, wobei der Schaftteil (1) im Querschnitt rechtwinklig ist.

3. Betonverstärkende Stahlfaser gemäß Anspruch 1, wobei der Schaftteil (1) im Querschnitt kreisförmig ist.

4. Betonverstärkende Stahlfaser gemäß Anspruch 1, 2 oder 3, wobei die Dicke der zweiten Knotenelemente (3a, 3b, 3c, 3d) über die gesamte Länge der Faser bezüglich deren Achse gleich ist.

5. Betonverstärkende Stahlfaser gemäß einem der vorangehenden Ansprüche, wobei die zweiten Knotenelemente (3a, 3b, 3c, 3d) an ihren Seiten winkelig sind, wodurch eine Maximaldicke an ihrer Mitte in dem bezüglich der Ebene der ersten Knotenelemente (2a, usw.) transversalen Querschnitt definiert ist.

6. Betonverstärkende Stahlfaser gemäß einem der Ansprüche 1—4, wobei die zweiten Knotenelemente (3a, 3b, 3c) in dem bezüglich der Ebene der ersten Knotenelemente (2a, usw.) transversalen Querschnitt bogenartig geformt sind.

7. Betonverstärkende Stahlfaser gemäß einem der vorangehenden Ansprüche, wobei die Länge des zentralen Schaftteils (1) zwischen $\frac{1}{2}$ und $\frac{1}{4}$, vorzugsweise ungefähr $\frac{1}{3}$ der Länge der Faser beträgt.

8. Verfahren zum Herstellen von betonverstärkenden Stahlfasern gemäß Anspruch 1, gekennzeichnet durch die Schritte,

einen Draht (5) zwischen ein Paar von Formwalzen (21, 21') einzuführen, die abwechselnde erste und zweite Oberflächenteile (23, 23'; 24, 24') haben, welche während der Drehung der Walzen einen allmählich zunehmenden und abnehmenden Spalt (G) bilden, wobei sich in dem ersten und/oder zweiten Oberflächenteil gleichmäßig beabstandete Knoteneindrücknuten (22, 22', 25, 25') befinden, die sich parallel zur Walzenachse erstrecken;

kontinuierlich die genannten Knotenelemente der Fasern zwischen den den kleineren Spalt definierenden Oberflächenteilen (23, 23') der Formwalzen (21, 21') einzudrücken, während der zentrale Schaftteil der Fasern zwischen den den maximalen Walzenspalt definierenden Oberflächenteilen (24, 24') im wesentlichen unbearbeitet gelassen wird; und die Fasern durch Abschneiden des die Formwalzen (21, 21') verlassenden Materials zu trennen.

9. Verfahren nach Anspruch 8, dadurch gekennzeichnet, daß ein Draht-Rohmaterial (4) auf vier Seiten dünner gewalzt wird, indem es durch Gruppen ($R_1$—$R_9$) von vier Walzen läuft, die einen rechteckigen Spalt bilden, wobei eine Walze jeder Gruppe derart angetrieben wird, daß die Walzgeschwindigkeit gemäß der vorbestimmten Reduktion zunimmt, und daß der dadurch erzielte feine Draht in die Formwalzen (21, 21') eingeführt wird.

## Revendications

1. Fibre en acier pour le renforcement du béton comportant une pluralité de premiers noeuds aplatis (2a, 2b, 2c, 2d) et une pluralité de second noeuds (3a, 3b, 3c, 3d) s'étendant essentiellement dans des directions perpendiculaires au plan des premiers noeuds, caractérisée en ce que ces neouds (2a, 3a, etc...) sont prévus alternativement entre chaque extrémité de la fibre et une portion d'arbre centrale (1) qui peut s'allonger dans le béton, les premiers noeuds (2a, etc...) devenant plus grands et plus minces dans le sens de la longueur de la fibre, à partir de la portion centrale formant arbre (1) en direction des extrémités de la fibre, tandis que les seconds noeuds (3a, etc .) deviennent plus épais par rapport à la surface des premiers noeuds (2a etc...).

2. Fibre en acier pour le renforcement du béton suivant la revendication 1 caractérisée en ce que la portion formant arbre (1) a une section droite rectangulaire.

3. Fibre en acier pour le renforcement du béton suivant la revendication 1 caractérisée en ce que la portion formant arbre (1) a une section droite circulaire.

4. Fibre en acier pour le renforcement du béton suivant l'une quelconque des revendications 1, 2 ou 3 caractérisée en ce que l'épaisseur des seconds noeuds (3a, 3b, 3c, 3d) est constante sur la totalité de la longueur de la fibre, par rapport à l'axe de celle-ci.

5. Fibre en acier pour le renforcement du béton suivant l'une quelconque des revendications précédentes caractérisée en ce que les seconds noeuds (3a, 3b, 3c, 3d) forment un angle à l'endroit de leurs bords, en définissant ainsi une épaisseur maximale à l'endroit de leurs centres, dans la section droite transversale par rapport au plan des premiers noeuds (2a, etc...).

6. Fibre en acier pour le renforcement du béton suivant l'une quelconque des revendications 1—4 caractérisée en ce que les seconds noeuds (3a, 3b, 3c) sont en forme d'arcs en section droite transversale par rapport au plan des premiers noeuds (2a, etc. . .).

7. Fibre en acier pour le renforcement du béton suivant l'une quelconque des revendications précédentes caractérisée en ce que la longueur de la portion centrale formant arbre (1) est comprise entre $\frac{1}{2}$ et $\frac{1}{4}$ de la longueur de la fibre et elle est de préférence d'environ $\frac{1}{3}$ de cette longueur.

8. Procédé de fabrication de fibres en acier pour le renforcement du béton suivant la revendication 1 caractérisé en ce qu'il comprend les étapes consistant à introduire un fil (5) entre une paire de rouleaux de formage (21, 21') ayant des premières et secondes portions de surfaces alternées (23, 23'; 24, 24') définissant un intervalle (G) augmentant et diminuant progressivement pendant la rotation des rouleaux, ces première et/ou seconde portions de surface présentant des gorges d'impression des noeuds (22, 22', 25, 25') équidistantes les unes des autres, lesquelles s'étendent parallèlement aux arbres des rouleaux; à imprimer d'une manière continue les noeuds des fibres entre les portions de surfaces (23, 23') des rouleaux de formage (21, 21') définissant le plus petit intervalle, tout en laissant la portion centrale formant arbre des fibres essentiellement non laminée entre les portions de surfaces (24, 24') définissant l'intervalle maximal entre les rouleaux, et à séparer les fibres en coupant le matériau quittant les rouleaux de formage (21, 21').

9. Procédé suivant la revendication 8 caractérisé en ce qu'un matériau brut filiforme (4) est soumis à une réduction par laminage, sur quatre côtés, en le faisant passer à travers des groupes ($R_1$—$R_9$) de quatre rouleaux formant un intervalle rectangulaire, un rouleau de chaque groupe étant entraîné de telle façon que la vitesse de laminage soit augmentée conformément à la réduction prédéterminée, et le fil fin obtenu ainsi est introduit dans les rouleaux de formage (21, 21').

# FIG.1

# FIG.2

# FIG.3

# FIG.4

# FIG.5

# FIG.6

# FIG.7

# FIG. 12

# FIG.8

# FIG.13

# FIG.9

A  Fiber of the invention
B  Cut fiber (with indents)
C  Sheared fiber

LOAD (kg)

A 2% Vol
A 1% Vol
B 2% Vol
C 2% Vol
B 1% Vol
C 1% Vol

6000
5000
4000
3000
2000
1000

Span stressing (mm)
Amount

1.0    2.0    3.0

# FIG.10

# FIG.14

# FIG.11

# FIG.15 (a)

# FIG.15 (b)

# FIG.15(c)

# FIG.15(d)